Europäisches Patentamt

European Patent Office

Office européen des brevets

(11) Veröffentlichungsnummer : **0 356 646 B1**

(12) **EUROPÄISCHE PATENTSCHRIFT**

(45) Veröffentlichungstag der Patentschrift :
26.02.92 Patentblatt 92/09

(21) Anmeldenummer : 89111652.7

(22) Anmeldetag : 27.06.89

(51) Int. Cl.⁵ : **E04F 15/10, B44C 3/00,
B29D 31/00**

(54) **Verfahren zur Herstellung eines willkürlich gemusterten Fussbodenbelages aus einem Vorformling aus Kautschuk.**

(30) Priorität : 26.07.88 EP 88111988
11.10.88 DE 8812749 U

(43) Veröffentlichungstag der Anmeldung :
07.03.90 Patentblatt 90/10

(45) Bekanntmachung des Hinweises auf die
Patenterteilung :
26.02.92 Patentblatt 92/09

(84) Benannte Vertragsstaaten :
AT BE CH DE ES FR GB GR IT LI LU NL SE

(56) Entgegenhaltungen :
EP-A- 0 310 779
DE-C- 646 565
FR-A- 748 940
FR-A- 758 408

(56) Entgegenhaltungen :
US-A- 1 816 822
US-A- 3 017 714
PATENT ABSTRACTS OF JAPAN, Band 9, Nr.
184 (C-294)[1907], 30. Juli 1985; & JP-A-60 52
681 (FUSOU GOUSEI K.K.) 25-03-1985

(73) Patentinhaber : **Firma Carl Freudenberg**
**Höhnerweg 2-4**
**W-6940 Weinheim/Bergstrasse (DE)**

(72) Erfinder : **Heckel, Klaus, Dr.**
**Am Wetzelsberg 6**
**W-6946 Gorxheimertal (DE)**
Erfinder : **Arnold, Herbert**
**Ofenbergstrasse 4**
**W-6942 Mörlenbach (DE)**
Erfinder : **Rischer, Dieter**
**Löhrbacher Strasse 16**
**W-6941 Abtsteinach (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 356 646 B1

**Beschreibung**

Die Erfindung betrifft ein Verfahren zur Herstellung eines willkürlich gemusterten Fußbodenbelages aus einem Vorformling aus Kautschuk und mit kontrastfarbenen Zonen, bei dem der Vorformling zumindest in die Gestalt eines die Oberseite reliefartig überragende Erhebungen aufweisenden Rohlings überführt, durch Vulkanisierung verfestigt und nur im Bereich der Erhebungen einer schneidenden Bearbeitung unterworfen wird.

Ein solches Verfahren ist aus der DE-A-28 36 642 bekannt. Der Vorformling besteht dabei aus einer dicken Unterschicht und einer dünnen Oberschicht, die nach dem Zusammenfügen in einem Formwerkzeug gemeinsam verpresst werden, wobei im Bereich von willkürlich vorgegebenen Ausnehmungen des Formwerkzeuges reliefartig vorspringende Erhebungen an der späteren Sichtseite des Rohlings entstehen, die nach der Vulkanisierung oberflächlich derart abgeschliffen werden, daß an diesen Stellen das obere Flächengebilde vollständig entfernt und das kontrastfarbene, untere Flächengebilde sichtbar wird. Das obere und das untere Flächengebilde bedürfen der separaten Herstellung und Bearbeitung, was mit einem erheblichen Aufwand verbunden ist.

Aus der US-A-18 16 822 ist ein Verfahren zur Herstellung eines Fußbodenbelages aus Gummi bekannt, bei dem in der verwendeten Kautschukmischung kontrastfarbene Gummipartikel verteilt werden, bei dem die Kautschukmischung anschließend in die Gestalt des Fußbodenbelages überführt, anvulkanisiert, im Bereich der Oberseite einer schneidenden Bearbeitung zur Freilegung der Partikel unterworfen und fertig vulkanisiert wird. Die durch die Lage der Partikel bestimmten, kontrastfarbenen Zonen sind hierbei einander in einer statistischen Verteilung zugeordnet. Sie vermitteln dem Betrachter einen gesprenkelten oder marmorierten Gesamteindruck des Fußbodenbelages. Die Erzielung eines Musterungsbildes von definierter Gestalt ist auf diese Weise ausgeschlossen.

Der Erfindung liegt die Aufgabe zugrunde, ein einfach durchzuführendes Verfahren zur Herstellung eines Fußbodenbelages aus Gummi zu zeigen, das es gestattet, kontrastfarben erscheinende Zonen in willkürlich vorgegebenen Musterungsbereichen der Gesamtfläche zu erzeugen.

Diese Aufgabe wird erfindungsgemäß bei einem Verfahren der eingangs genannten Art dadurch gelöst, daß der Kautschuk zur Bildung der Zonen mit wenigstens 10 Gew.-% kontrastfarbener Partikel gleichmäßig durchmischt wird, die im wesentlichen frei sind von eben gestalteten Oberflächen und sich zumindest in einem fortgeschrittenen Vulkanisationsstadium befinden, daß nur Partikel mit einem Durchmesser von 1,2 bis 1,4 mm eingemischt werden, daß das Flächengebilde mit nach unten weisender Oberseite vulkanisiert wird und daß die Bearbeitung des vulkanisierten Rohlings so vorgenommen wird, daß die innerhalb der Erhebung befindlichen Partikel angeschnitten werden.

Die Erhebungen können mit Hilfe eines Pressenwerkzeuges an dem noch in plastischem Zustand befindlichen Rohling angebracht werden. Ihre örtliche Lage ist in Abhängigkeit von der Gestalt und des verwendeten Pressenwerkzeuges willkürlich in jedem gewünschten Musterungsbild festlegbar und erfährt während der nachfolgenden Vulkanisierung des Rohlings eine bleibende Fixierung.

Die Kautschukmischung und die Partikel sind unterschiedlich eingefärbt und der die Partikel bildende Gummiwerkstoff befindet sich, bezogen auf den Kautschuk, zumindest in einem fortgeschrittenen Vulkanisationsstadium. Er wird dadurch während der Vulkanisierung des Rohlings an einer synchronen Erweichung mit dem Kautschuk gehindert, was es ausschließt, daß sich gegenseitige Durchmischungen der in den Partikeln und in dem Kautschuk enthaltenen Farben ergeben. In dem gebrauchsfertigen Fußbodenbelag sind dadurch die Partikel in einer präzisen Weise gegenüber der umgebenden, aus dem Kautschuk gebildeten Gummimatrix abgegrenzt. Der diesbezügliche Effekt läßt sich bereits mit großer Sicherheit erreichen, wenn sich die Partikel lediglich in einem anvulkanisierten und der Kautschuk in einem unvulkanisierten Zustand befinden.

Die Partikel sind im wesentlichen frei von eben gestalteten Oberflächenzonen, wodurch sie während der Durchmischung mit dem Kautschuk allseitig von diesem benetzt und nach dessen Überführung in die Gestalt des Rohlings im Bereich von dessen Oberflächen so gut wie nicht mehr sichtbar sind. Der Rohling hat dadurch auch nach seiner Vulkanisierung im wesentlichen nur die Farbe des eingesetzten Kautschuks.

Der Gehalt an kontrastfarbenen Partikeln ist mit wenigstens 10 Gew.-%, bezogen auf das Gewicht des Rohlings, vergleichsweise hoch, was dazu führt, daß diese nach der schneidenden Bearbeitung der Stirnflächen der Erhebungen maßgeblich deren farblichen Gesamteindruck bestimmen. Die Stirnflächen der Erhebungen treten dadurch in ästhetischer Hinsicht als Musterungszonen in Erscheinung, die in klarer Weise von den umgebenden, unbearbeitenden Zonen der Oberseite des gebrauchsfertigen Fußbodenbelages abgegrenzt sind. Sie zeichnen sich durch die enthaltenen Unregelmäßigkeiten zusätzlich durch eine besonders gute Dauerhaftigkeit aus, wodurch der Fußbodenbelag auch bei intensivem Gebrauch und nach langer Zeit sein ursprüngliches Aussehen weitestgehend beibehält.

Die Partikel sollten einen Durchmesser haben, der geringer ist als die Dicke des Fußbodenbelages, jedoch groß genug, um bei einer Entfernung des menschlichen Auges von 2 bis 3 Meter die Partikel deutlich in Erschei-

2

nung treten zu lassen. Die Einmischung von Staubabfall ist unter diesem Gesichtspunkt ebenso ungeeignet wie die Einmischung von Partikeln, deren Dicke größer ist als die Dicke des Fußbodenbelages an der dünnsten Stelle. Unter normalen Bedingungen hat sich die Verwendung von Partikeln als vorteilhaft bewährt, die einen mittleren Durchmesser von 1,2 bis 1,4 mm haben, wobei der Gehalt an staubförmigen Partikeln mit einem Durchmesser von weniger als o,5 mm weniger als 2 Gew.-% beträgt. Eine regelmäßige Wölbung der Oberfläche der Partikel ist nicht nötig, sofern sichergestellt ist, daß das Vorhandensein von in sich ebenen Oberflächen zumindest überwiegend, vorteilhaft ganz ausgeschlossen ist.

Ein besonders gutes Musterungsbild läßt sich erhalten, wenn der Rohling mit nach unten weisender Oberseite vulkanisiert wird. Die kontrastfarbenen Partikel werden in diesem Falle in einer besonders gleichmäßigen Weise in den Bereich der späteren Oberseite eingelagert und fixiert.

Durch den Maximalgehalt von 50 Gew.-% an kontrastfarbenen Partikeln wird sichergestellt, daß diese während ihrer Einmischung in den Kautschuk vollständig in die daraus gebildete Gummimatrix eingebunden werden. Wird ein noch höherer Gehalt an Partikeln gewählt, dann besteht die zunehmende Gefahr, daß einzelne Partikel im Bereich der nicht bearbeitenden Zonen der Oberseite des Fußbodenbelages störend sichtbar werden oder durchscheinen. Das insgesamt erzielte Musterungsbild kann hierdurch eine Beeinträchtigung erfahren. Ein Mindestgehalt an kontrastfarbenen Partikeln von 20 Gew.-%, vorteilhafter noch von 30 Gew.-% bei Einhaltung der angegebenen Obergrenze wird bevorzugt.

Die musterartig verteilten, die Oberseite des Rohlings reliefartig überragenden Vorsprünge können mit Hilfe eines Pressenwerkzeuges erzeugt sein und zeichnen sich in diesem Falle durch eine besonders präzise Ausbildung aus. Sie können während der schneidenden Bearbeitung gegebenenfalls auch ganz entfernt werden.

Die schneidende Bearbeitung der Erhebungen kann mit Hilfe einer Schleif- oder Spaltmaschine vorgenommen werden, wobei im allgemeinen eine geradlinige Schnittführung zur Anwendung gelangt. Sie läßt sich im großtechnischen Maßstab besonders einfach durchführen und gewährleistet eine große Kontinuität der erhaltenen Produkte.

Der Gegenstand der Erfindung wird nachfolgend anhand der in der Anlage beigefügten Zeichnung weiter verdeutlicht:

Es zeigen:

Figur 1

Die Schneidführung bei dem erfindungsgemäßen Verfahren.

Figur 2

Eine nach dem erfindungsgemäßen Verfahren erhaltenen Fußbodenbelag in der Draufsicht.

Beispiel 1:

100 Gewichtsteile einer Kautschukmischung der Farbe 1 werden in einem Gummiinnenmischer mit 20 Gewichtsteilen eines bereits vulkanisierten Gummimahlgutes der Farbe 2 mit einer Korngröße von 1,2 bis 1,4 mm bis zur völligen Durchmischung vermischt. Aus dieser Mischung wird auf einem Walzwerk oder Kalander ein Vorformling mit einer Dicke von 5 mm gezogen.

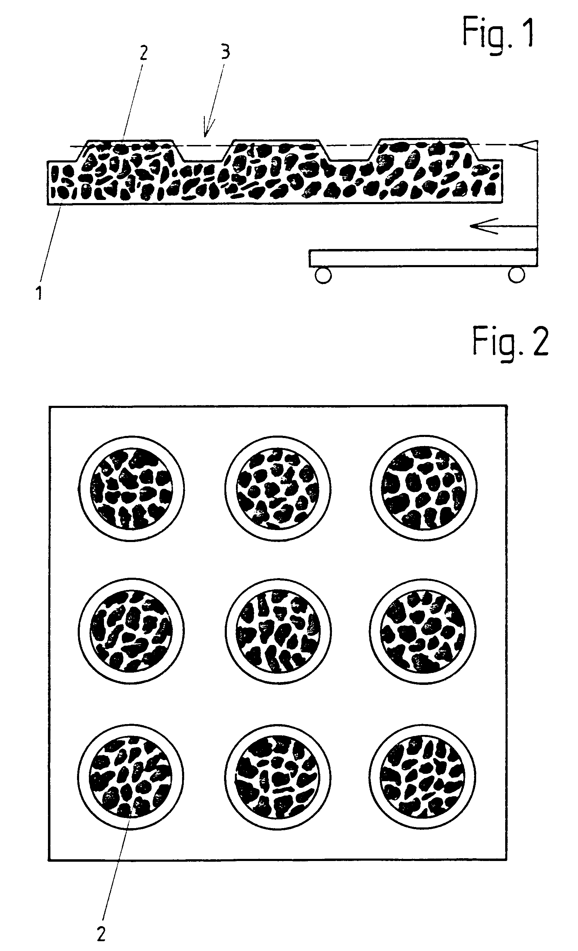

Von diesem werden Stücke abgetrennt und in ein Pressenwerkzeug überführt, das auf der einen Seite durch eine ebene Formfläche und auf der anderen Seite durch eine Formfläche begrenzt ist, die auf einem quadratischen Grundraster einer Kantenlänge von 35 mm kegelstumpfförmig gestaltete Eintiefungen aufweist, die eine Tiefe von 1,5 mm bei einem größten Durchmesser von 25 mm haben. Die Formflächen werden an die einander gegenüberliegenden Seiten des Vorformlings derart angepreßt, daß dieser sich der Gestalt der Formflächen anpaßt und in die Gestalt des Rohlings überführt wird (Figur 1). Die Gestalt wird durch den gleichzeitig ablaufenden Vulkanisationsvorgang bleibend fixiert.

Von dem erhaltenen Rohling wird anschließend in der in Figur 1 gezeigten Weise das vorstehende Ende der Vorsprünge 2 abgetrennt. Hierbei werden die in den Erhebungen befindlichen Partikel angeschnitten. Diese bestimmen anschließend maßgeblich den farbigen Gesamteindruck der Stirnflächen der Vorsprünge 2. Die umgebenden, unbearbeiteten Zonen 3 haben demgegenüber weiterhin die Farbe 1 der eingesetzten Kautschukmischung.

Beispiel 2:

100 Gewichtsteile einer Kautschukmischung der Farbe 1 werden in einem Mischwerk mit 20 Gewichtsteilen eines bereits vulkanisierten Gummimahlgutes der Farbe 2 und mit einem durchschnittlichen Durchmesser von 1,3 bis 1,4 mm bis zur völligen Homogenisierung der Mischung vermischt. Aus dieser Mischung wird mit Hilfe eines Walzwerkes, eines Kalanders oder Extruders ein Vorformling mit einer Stärke von 5 mm gezogen.

Von dem Vorformling werden Stücke passender Größe abgetrennt und einer Presse mit einem ebenen Formunterteil und einem Formoberteil mit darin eingearbeiteten, musterartig verteilten Vertiefungen, die beim vulkanisierten Pressling oberflächliche Erhebungen ergeben, verpresst und in der Hitze vulkanisiert, wobei das der Kautschukmischung mit der Farbe 1 zugemischte Gummimahlgut mit der Farbe 2 nahezu vollständig von der Kautschukmischung umschlossen wird. Der nach der Vulkanisierung erhaltene Rohling wird nur im Bereich der Stirnflächen der reliefartigen Erhebungen der Oberseite überschliffen. Dabei werden die Partikel des Gummimahlgutes angeschnitten. Sie bestimmen maßgeblich den farblichen Gesamteindruck der Stirnflächen der Erhebungen 2, während zwischen diesen die Farbe 1 der eingesetzten Kautschukmischung im wesentlichen einfarbig erhalten bleibt.

## Patentansprüche

1. Ein Verfahren zur Herstellung eines willkürlich gemusterten Fußbodenbelages aus einem Vorformling aus Kautschuk und mit kontrastfarbenen Zonen, bei dem der Vorformling zunächst in die Gestalt eines die Oberseite reliefartig überragende Erhebungen aufweisenden Rohlings überführt, durch Vulkanisierung verfestigt und nur im Bereich der Erhebungen einer schneidenden Bearbeitung unterworfen wird, dadurch gekennzeichnet, daß der Kautschuk zur Bildung der Zonen mit wenigstens 10 Gew.-% kontrastfarbener Partikel (1) durchmischt wird, die im wesentlichen frei sind von eben gestalteten Oberflächen und sich zumindest in einem fortgeschrittenen Vulkanisationstadium befinden, daß nur Partikel (1) mit einem Durchmesser von 1,2 bis 1,4 mm eingemischt werden, daß das Flächengebilde mit nach unten weisender Oberseite vulkanisiert wird und daß die Bearbeitung des Flächengebildes derart vorgenommen wird, daß die im Bereich der Oberseite der Erhebungen befindlichen Partikel (1) angeschnitten werden.

2. Verfahren nach Anspruch 1, dadurch gekennzeichnet, daß die Partikel (1) in einer Menge von wenigstens 20 Gew.-% eingemischt werden.

3. Verfahren nach Anspruch 1, dadurch gekennzeichnet, daß die Partikel in einer Menge von wenigstens 30 Gew.-% eingemischt werden.

4. Verfahren nach Anspruch 1, dadurch gekennzeichnet, daß die regelmäßig verteilten, die Oberfläche reliefartig überragenden Vorsprünge mit Hilfe eines Pressenwerkzeuges erzeugt werden.

5. Verfahren nach Anspruch 1, dadurch gekennzeichnet, daß die schneidende Bearbeitung mit Hilfe einer Schleif- oder Spaltmaschine vorgenommen wird.

6. Verfahren nach Anspruch 1, dadurch gekennzeichnet, daß die Vorsprünge während der schneidenden Oberflächenbearbeitung vollständig entfernt werden.

## Claims

1. A process for making a randomly patterned floor covering from a preform of rubber and having zones of contrasting colours, in which the preform is first of all converted into the form of a blank having elevations protruding beyond the upper side in a relief-like manner, is set by curing and is subjected to cutting machining only in the region of the elevations, characterised in that the rubber for forming the zones is mixed thoroughly with at least 10% by weight of particles (1) of contrasting colours, which are substantially free from level surfaces and are in at least an advanced stage of curing, in that only particles (1) having a diameter of 1.2 to 1.4 mm are mixed in, in that the sheet-like structure is cured with the upper side facing down and in that the machining of the sheet-like structure is performed in such a way that the particles (1) in the region of the upper side of the elevations are cut into.

2. A process according to claim 1, characterised in that the particles (1) are mixed in in a quantity of at least 20% by weight.

3. A process according to claim 1, characterised in that the particles are mixed in in a quantity of at least 30% by weight.

4. A process according to claim 1, characterised in that the regularly distributed projections protruding beyond the surface in a relief-like manner are produced with the aid of a press tool.

5. A process according to claim 1, characterised in that the cutting machining is performed with the aid of a grinding or splitting machine.

6. A process according to claim 1, characterised in that the projections are removed completely during the cutting machining of the surface.

EP 0 356 646 B1

**Revendications**

1. Procédé de fabrication d'un tapis de sol à motifs arbitraires à partir d'une préforme en caoutchouc et avec des zones à couleurs contrastées, dans lequel la préforme passe d'abord à la forme d'une pièce brute comprenant des élévations qui dépassent en relief la face supérieure, est durcie par vulcanisation et est soumise uniquement au niveau des élévations à un usinage par un outil coupant, caractérisé en ce que pour former lesdites zones on mélange le caoutchouc avec au moins 10% en poids de particules (1) à couleurs contrastées qui sont dans l'essentiel exemptes de surfaces aplanies et se trouvent au moins dans un stade de vulcanisation avancé, en ce qu'on ajoute uniquement des particules (1) d'un diamètre de 1,2 à 1,4 mm au mélange, en ce que la surface composée est vulcanisée avec la face supérieure tournée vers le bas et en ce que l'on effectue l'usinage de la surface composée de surface de façon que les particules (1) se trouvant au niveau de la face supérieure des élévations soient coupées.

2. Procédé selon la revendication 1, caractérisé en ce qu'on ajoute les particules (1) en quantité d'au moins 20% en poids au mélange.

3. Procédé selon la revendication 1, caractérisé en ce qu'on ajoute les particules en quantité d'au moins 30% en poids au mélange.

4. Procédé selon la revendication 1, caractérisé en ce que les parties saillantes, dépassant la surface en relief et réparties régulièrement, sont produites à l'aide d'une presse.

5. Procédé selon la revendication 1, caractérisé en ce qu'on effectue l'usinage par un outil coupant à l'aide d'une machine à rectifier ou à refendre.

6. Procédé selon la revendication 1, caractérisé en ce qu'on enlève complètement les parties saillantes au cours de l'usinage des surfaces.

Fig. 1

Fig. 2